# EUROPEAN PATENT APPLICATION

(11) **EP 1 205 859 A2**
(43) Date of publication of application: **15.05.2002**
(21) Application number: 01309501.3
(22) Date of filing: 09.11.2001
(51) Int. Cl.: G06F 17/30

(54) **Apparatus and method for appending comment information to web pages**

(30) Priority: 10.11.2000 JP 2000344344
(71) Applicant: FUJITSU LIMITED, Kawasaki-shi, Kanagawa 211-8588 (JP)
(72) Inventor: Kurishima, Masahiro, Nakahara-ku, Kawasaki-shi, Kanagawa 211 (JP); Suzuki, Kuniyuki, Nakahara-ku, Kawasaki-shi, Kanagawa 211 (JP)
(74) Representative: Hitching, Peter Matthew

(57) **Abstract**

The client apparatus (6) of this invention merges a special tag with an arbitrary character string selected by a user who uses text in an arbitrary page he takes from a browser and is browsing, displays said tag, makes comment data for the selected character string in association with said tag, and saves the comment data as a comment file. The comment file can independently be transferred. When the comment file is clicked on, the annotation processing module is started up and a keyword is displayed on a keyword display frame. When this keyword is clicked on, the page including the keyword is displayed, and the keyword is displayed with marks, and the keyword merged with marks is displayed.

## Description

### Field of the Invention

This invention relates to a client apparatus which executes an annotation process such as appending, separating, recording and merging of an annotation without changing an original text described in a markup language indicated by a network browser by accessing a server of the Internet and an intranet, and a recording medium that records a program for it.

### Description of the Prior Art

An annotation is sometimes appended as additional information to text described in a markup language (such as HTML and SGML) that is displayed as a Web page on the terminal unit of a client on a network like the Internet. In this case, such an annotation is appended mainly by a proxy server provided between the Internet and an intranet. Information of a Web page obtained via the same proxy server is displayed as the same result. In other words, the tag of the above-mentioned annotation always corresponds to that in a Web page to which the annotation is appended, in a 1 to 1 format, which is displayed by a network browser.

However, the above-mentioned annotation is appended mainly by a proxy server, as already described, and a client who browses that page (hereinafter called a Web page) cannot separate the annotation. Therefore, the annotation alone cannot be stored independently of the Web page. Of course, if the Web page is downloaded as it is, the whole page can be stored. However, this does not unittoring of the annotation alone, and is of no use when one wants to extract only the annotation in order to use the annotation for some other purpose.

There is also a server that can display an annotation that is separated from a page in which the annotation is included. This server is called a discussion server. Note, however, that this server is simply such a server as follows . When some people discuss a subject by appending their annotations to a certain page, the annotations separated from the page are collectively controlled together with the page by the discussion server, and a text file of the discussion server is retrieved by link information from the page, and the annotations drawn therefrom are sent to the terminal unit of a client and are displayed on the display screen. In other words, a client has no freedom of separating annotations from the page, of storing annotations or of merging annotations with any other page. Therefore, this server does not allow one to manipulate an individual annotation independently of the page, and it is simply such a type of server that the people concerned with the discussion merely view the annotations extracted from the server. Also, it is necessary to leave a discussion server installed, causing some restrictions in preparing facilities to be generated.

Simply speaking, the difference between a proxy server and a discussion server is that the former has the function for adding annotation information to the tag of each sentence, each image segment and so forth, while the latter has the function for adding general information to an entire page (namely the page itself). Neither the former nor the latter can allow a client to separate an annotation from the page, store an annotation or merge an annotation with another page. That is, usage of information is greatly limited in these servers.

### Summary of the Invention

The purpose of this invention is to provide a client apparatus in which a client can append a desired annotation to a desired place on the page that the client is browsing and to provide a recording medium that records a program for said apparatus, and also to provide a client apparatus in which a client separates the appended annotation information from data described in a markup language, or store or merge said annotation and to provide a recording medium that records a program for said apparatus.

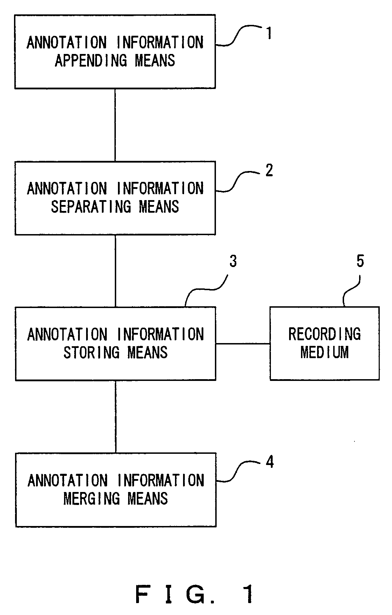

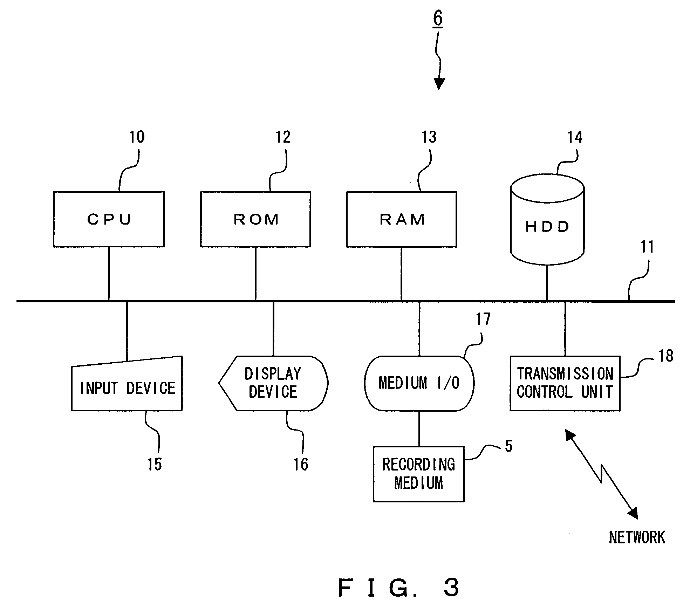

This invention is composed of annotation information appending unit 1, annotation information separating unit 2, annotation information storing unit 3 and annotation information merging unit 4, as shown in the principle diagram of Fig. 1. The annotation information storing unit 3 is equipped with a medium I/O device 17, as shown in Fig. 3, which reads and writes a desired program to a portable recording medium 5.

In an embodiment of this invention, the client apparatus in which a client displays and browses a page made in a markup language using a browser appends, separates, stores and merges annotation information. The annotation information appending unit 1 appends desired annotation information such as character string information, graphical information, signature and certification information, and hypertext link information to any arbitrary place on a page such as a specified tag of a markup language, a specified character string in a tag and graphical information in a tag. The annotation information separating unit 2 separates appended annotation information from the page. The annotation information storing unit 3 stores separated annotation information. This annotation information can be distributed, jointly owned or transferred via a network or via a recording medium. Hypertext link information can include a function of a shortcut to a network or a function of a bookmark to a Web page. The annotation information merging unit 4 merges stored annotation information with a desired page.

The recording medium 5 records a program for said client apparatus that displays a page made by a markup language using a browser. The program that executes the following processes: appending desired annotation information to a desired place on a page made in a markup language, separating said annotation information from the markup language, storing said separated annotation information, and merging said stored annotation information with a desired page made in a markup language.

Thereby this invention makes for a client to append an annotation to the markup language in a displayed Web page using the function that is incorporated in the browser as a built-in application, to separate the annotation from the markup language, to store the separated annotation in the storing device and to merge the stored annotation with original text in the markup language, so that the client can append an annotation to a Web page or can extract only the annotation and send it as a file to someone else, while the party who has received said annotation can display and view said annotation on a Web page.

In addition, since the client is able to make, append, separate and merge an annotation in a Web page, for example, when a staff member of a corporation makes an application for a plan in a Web page and obtains approval from his managers and directors, he can leave the original text of the plan as it is and he can bring only the annotation appended therein to each manager and director, while the managers and directors can call-up the page related to the annotation from a network and affix a digital signature to indicate whether he agrees to or opposes the applied plan and append annotations to a desired place on the application page.

It is also possible to make an annotation file that collects each annotation by separating annotation data appended to a Web page. For instance, it is possible to make an annotation file which uses each URL of bookmarks and an explanation for it as annotation data, and transmit it to the other party, and for the other party to display a list of bookmarks when clicking on said annotation file. Therefore, said annotation file can be applied as global bookmark distribution data in the WWW.

In the same way, it is possible to make an annotation file that uses all of the contents (line by line) as the keyword, open the annotation file, click on the contents and open a page linked with the page clicked on, and thus to collectively use only the annotation file like one book, as is the case with a scrapbook binder.

In addition, even if a user cannot update an original text (source data) in a page provided by a sever, this invention enables the client to append his desired annotation to said page. Also, the data capacity is too small to save the annotation data (annotation file) required to append an annotation to a Web page separated from the data in the Web page instead of the data in the whole Web page to which an annotation is appended, and the memory device of the client is not occupied thereby. Since the data capacity is small, as mentioned above, no load is imposed on the network even when the client sends the annotation by e-mail.

Furthermore, there are such various advantages that it is sufficient for the client to have a function for executing the process of this invention in order to display the annotation, causing no restrictions in preparing the facilities for displaying the annotation.

### Brief Description of Diagrams and Figures

Fig. 1 is the diagram showing the principle of this invention.

Fig. 2 is the schematic diagram showing an entire system related to a client apparatus in an embodiment of the invention.

Fig.3 is the block diagram showing the circuit configuration of the client apparatus.

Fig. 4 is the flowchart showing the processing operation for appending, separating, and storing an annotation that is executed by a CPU of the client apparatus.

Fig. 5 is the flowchart showing the processing operation for merging and displaying an annotation that is executed by a CPU of the client apparatus.

Fig. 6A is an example of the annotation button added to the browsers that are displayed on the display screen of the client apparatus when an annotation is appended, separated or stored. Fig. 6B is an example of the window that displays a keyword.

Fig.7 is an example of the window display of the annotation a client wants to append on the display screen of the client apparatus when an annotation is appended, separated or stored.

Fig. 8 is the figure of the annotation button and the annotation input window displayed on the display screen of the client apparatus when an annotation is appended, separated or stored.

Fig. 9A is the figure showing a data structure used for communications between an annotation processing module and a browser. Fig. 9B is the figure showing a description displayed before inserting a tag of a markup language displayed by a browser. Fig. 9C is the figure showing a description displayed after inserting a tag of a markup language displayed by a browser.

Fig. 10 is the figure showing a display on the keyword display window and a mark by a browser, which are displayed on the display screen of the client apparatus when an annotation is appended, separated or stored.

Fig. 11 is the figure showing an example of the display window of the operation for designating a file which stores annotation data displayed on the display screen of the client apparatus when an annotation is appended, separated or stored.

Fig. 12 is the figure showing an example of the display window of the operation for selecting an annotation file displayed on the display screen of the client apparatus when an annotation is appended, separated or stored.

Fig. 13 is the figure showing an example of the display window that is displayed on both an annotation window by the annotation processing module and the HTML window by a browser displayed on the display screen of the client apparatus when a client selects an annotation file that has been made.

Fig. 14 is the figure showing an example of the display window that is displayed when a client selects a character string that is a keyword in a page when selecting a keyword.

### Description of the Preferred Embodiments

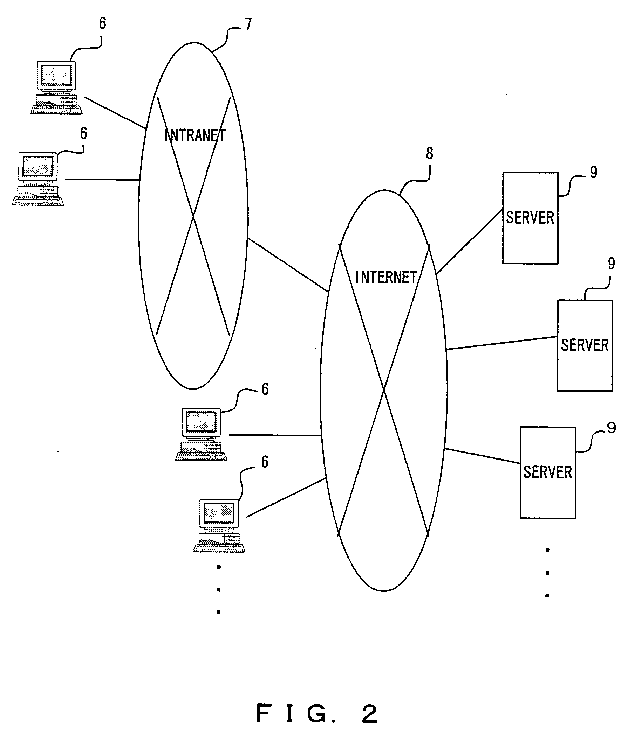

Described below is the mode for realizing the invention with reference to the diagrams and figures. Fig. 2 is the schematic diagram showing an entire system related to a client apparatus in an embodiment of the invention. A client apparatus 6 that comprises some devices such as a personal computer, as shown in Fig.2, is connected to the Internet 8 directly or via an intranet 7, and many servers are connected to the Internet. A network browser is mounted in the client apparatus 6, and the desired text of a server 9 can be accessed by the network browser via the Internet (or the intranet).

A large number of texts that are identified by each individually specified URL are stored in the server 9. Many of the texts are described in the HTML (hypertext markup language) that has to date been a standard language, and these texts are accessed and extracted by a network browser in the client apparatus 6 and are displayed on the display screen of the client apparatus 6.

Fig. 3 is the block diagram showing the circuit diagram of the client apparatus 6. The client apparatus consists of a CPU (central processing unit) 10, a ROM 12, a RAM 13, an HDD14, an input device 15, a display device 16, a medium I/O device 17 and a transmission control unit 18 that are all connected to the CPU 10 via a bus 11. A portable recording medium 5 that can freely be mounted or dismounted is mounted in the medium I/O device 17. The recording medium is, for example, an external HD (hard disk), an FD (floppy disk), an MO (magneto-optical disk), a CD-RW (CD ReWritable) or a memory card.

The ROM 13 temporarily stores the OS that is read from the recording medium 5 connected to the hard disk of the HDD 14 or the medium I/O device 17, various kinds of application software and various kinds of intermediate data.

The ROM 12 is, for example, a flash ROM ( ROM that has electrically rewritten contents), and firmware to control each hardware mechanism is stored in said ROM.

The RAM 13 temporarily stores the OS that is read from the recording medium 5 connected to the hard disk of the HDD 14 or the medium I/O device 17, various kinds of application software and various kinds of intermediate data.

The HDD 14 is a hard disk drive device with which a hard disk is integrated, and not only an OS but also an annotation processing program related to this invention, and various kinds of other application software are stored in advance in the HDD 14.

The input device 15, which is not illustrated in any figure attached hereto, is equipped with a keyboard and a pointing device like a mouse, a track ball, a stick pointer or a flat point, and it provides the CPU 10 with inputted information.

The display device 16 is equipped with a CRT, an LCD or a plasma display. It displays, under control from the CPU 10, information inputted from the input device 15 or image data formed from various kinds of processing contents that corresponds to the inputted information.

The medium I/O device 17 is an input/output interface that connects a drive device of various kinds of portable recording media 5. It records, under control from the CPU 10, a desired program or desired data in the recording medium 5, and reads a desired program or desired data from the recording medium 5 and transfers it to the RAM 13 or the HDD 14.

The transmission control unit 18 is equipped with an I/O input/output interface having a connector that connects a modem, a modem card or a module. The unit 19 is connected to the intranet or the Internet via a public circuit, which is not illustrated in any figure attached hereto, and is constructed in such a way that communications can be performed with a desired server 9.

The CPU 10 controls each hardware mechanism based upon the firmware stored in the ROM 12, controls the overall operation of the apparatus according to the OS that is read from the hard disk of the HDD14 to the RAM 13, reads an annotation processing program (annotation module) that has been transferred from the recording medium 5 to the hard disk of the HDD 14, and, in accordance with this annotation processing program that has been read as the above, executes annotation processing such as appending, separating, storing and merging of an annotation that has been added to text described in a markup language, which is explained hereinafter.

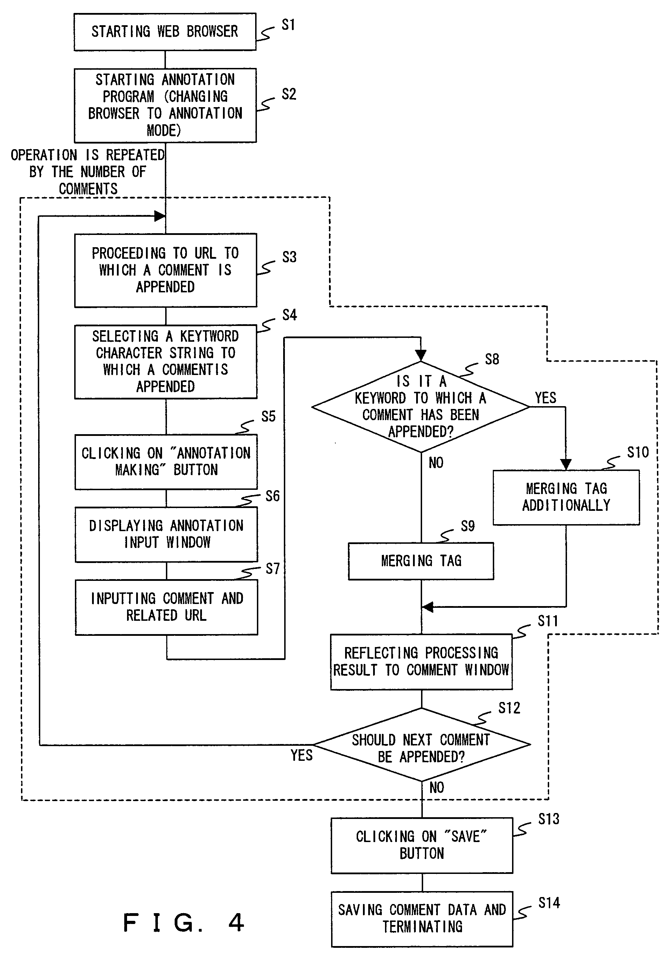

Fig. 4 is the flowchart showing the processing operation of appending, separating or storing an annotation that is executed, based upon the annotation processing program, by the CPU 110 of the client apparatus 6.

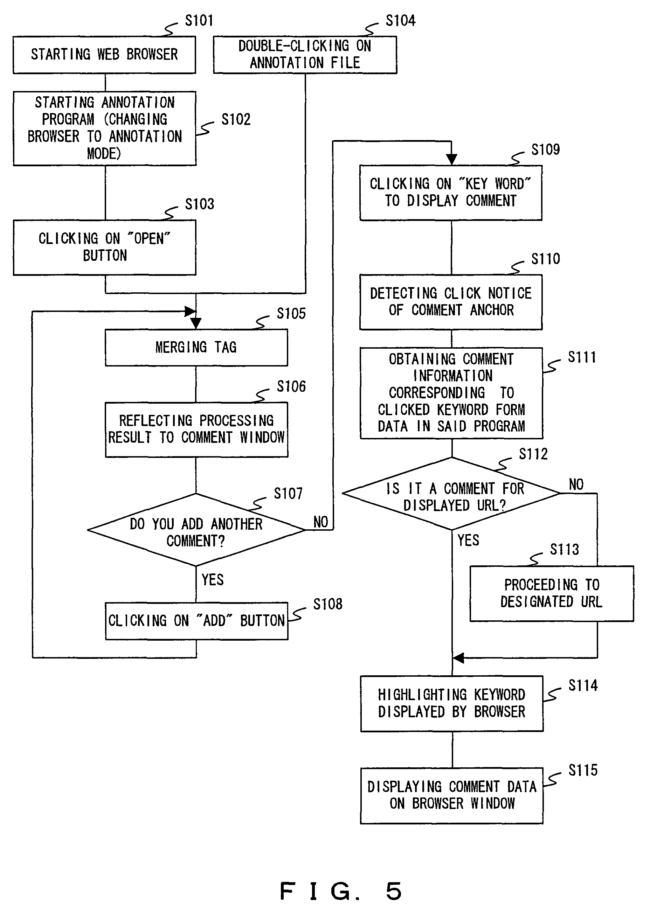

Fig. 5 is the flowchart showing the processing operation of merging and displaying an annotation that is executed, based upon the annotation processing program, by the CPU 110 of the client apparatus 6.

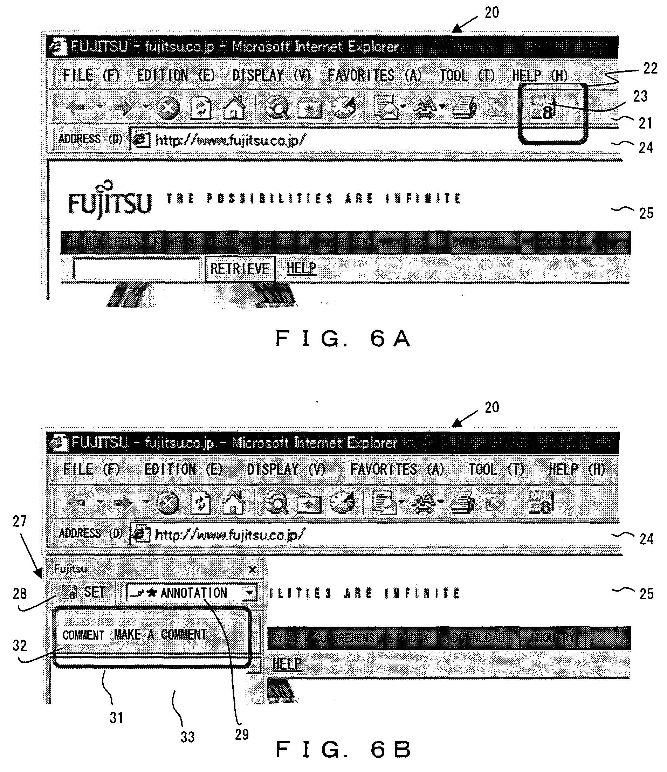

Fig. 6 to Fig. 13 are figures showing examples of the windows displayed on the display screen of the client apparatus 6.

Note that in the following descriptions that follow hereinafter, HTML (hypertext markup language) is used as a markup language, in order to obtain each text described in HTML from the server 9 via the Internet, HTTP is used as the protocol to access the text file in the server 9, an instruction for accessing a text file that should be obtained by HTTP is given by a URL (uniform resource locator) . Of course, an SGML (standard generalized markup language) or any other language can be used as the markup language, and an FTP protocol can be used as the protocol. Also, note that Web browser (network browser) is simply called a browser; a user of the client apparatus 6 is simply called a user; a window which includes only a tool bar, address input bar and annotation bar is a browser display window, and which does not include the window area in which a text file described in HTML is displayed is called a browser window to distinguish it from an HTML display area; an HTML display area or its display contents is called a page.

First, the browser is started up, as shown in the flowchart of Fig. 4 (Step S1). This process is operated by a user of the client apparatus. The user selects a browser icon such as Netscape Navigator or Microsoft Internet Explorer on the display window of the client apparatus 6 using a pointing device and clicks on the browser icon.

Then, a browser window 20 shown in Fig. 6A and a markup language text (characters and images) are displayed. An "annotation" button 23 that is indicated by a frame 22 and that is added by an annotation processing module of this invention is also displayed in a standard group of buttons on the tool bar 21 of the browser window 20 shown in Fig. 6A. In the example of Fig. 6A, an address page 25 displayed at an initial setting by a URL is displayed on the input bar 24.

After the above operation, an annotation program is started up (Step S2). This process is also operated by the user. That is, the user clicks on the "annotation" button 23 on the tool bar 21 shown in Fig. 6A (hereinafter called "click on a button").

Then, the browser changes to an annotation mode. That is, an annotation making function that is operated in a browser process by the annotation processing module of this invention, which is of a browser helper module type, starts up. An annotation window 27 is displayed on line on the browser window 20, as shown in Fig. 6B (on the left side of the window in the example shown in the same figure).

The annotation window 27 shown in Fig. 6B is composed of a "set" button 28 located in the upper left, a set contents selection bar 29 located on the right of the "set" button, an "annotation making" button 32 indicated by a frame 31 under said button and bar, and a keyword display frame 33 that occupies a majority of the area of the annotation window 27. Note that the word "comment" is used for "annotation" as the word having the same meaning in the descriptions that follow hereinafter.

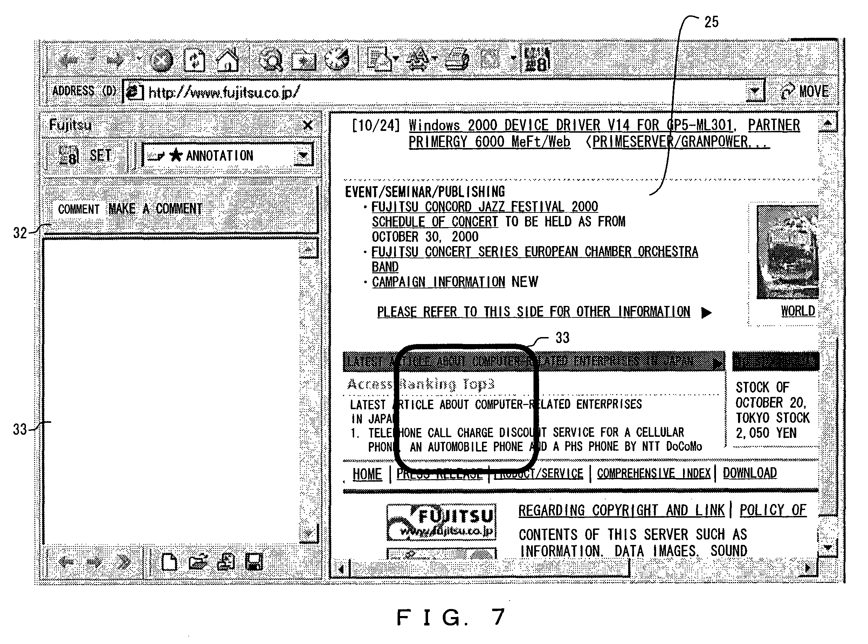

After the above operation, the user proceeds to the URL to which a comment is appended (namely, a page of an address designated by a URL) (Step S3). This process is also operated by the user. The user inputs a desired URL into an address input bar directly or by selecting it from the "favorites" pull-down menu to open a desired page. Thereby, a page to which the user wants to append a comment using a browser as shown in Fig. 7 is displayed.

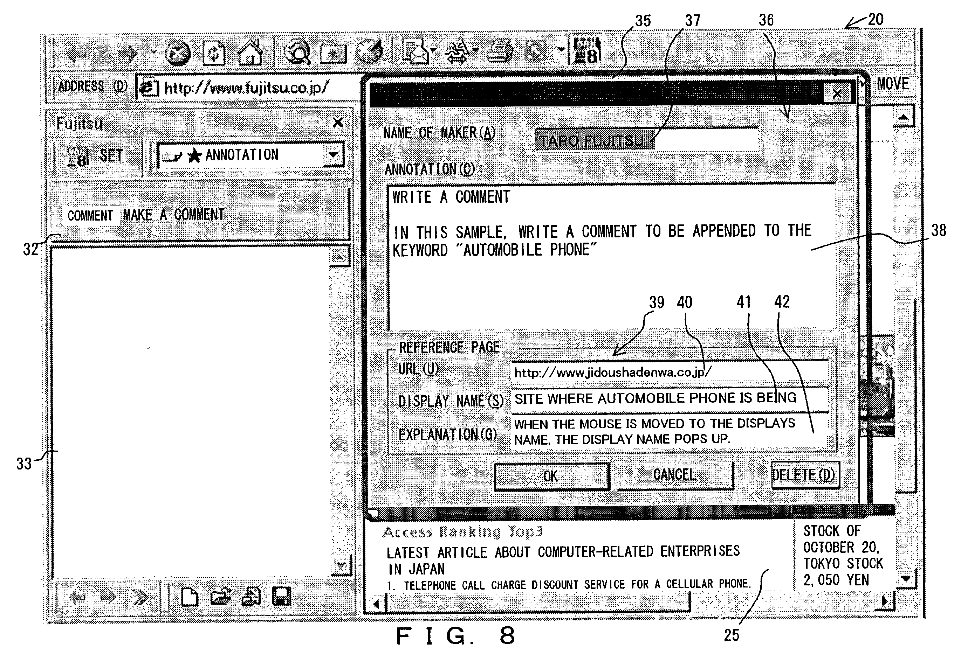

Then, the user selects a character string as a keyword to be used for appending a comment (Step S4). This process is operated by the user. This is the process for the user to select an arbitrary character string displayed at page 25. For a example, as shown in Fig. 7, the user selects a character string of "automobile phone" displayed by a frame 34. Then, this "automobile phone" character string is highlighted as the character string of the keyword by the annotation processing module, as shown in Fig. 8.

Note that in the descriptions that follow hereinafter, a "character string" stands for a character string in text to which the user wants to append a comment, and to select and highlight a character string in the text at page 25 to which the user wants to append a comment is called "selection of a character string." Also, note that a "keyword" stands for a character string to which the user has appended a comment, and to click on and select a character string (a keyword) to display the comment contents out of a list of character strings indicated in the keyword display frame 33 is called "selection of a keyword."

When the user selects a character string and clicks on the "comment making" button 32 (Step S5), a comment data input dialog 36 indicated by a frame 39 shown in Fig. 8 is displayed by the annotation processing module (Step S6).

Displayed in the comment data input dialog 36 are a commentator name input frame 37, a comment input frame 38, a reference page 39, an "OK" button, a "cancel" button and a "delete" button. There are a URL input frame 40, display name input frame 41 and explanation input frame 42 in the reference page 39.

Then, a comment and a related URL (Step S7) are inputted. This process is also operated by the user. The name of the person who makes the comment is inputted in the commentator name input frame 37. A comment to be appended to the selected character string "automobile phone" is inputted in the comment input frame 38. The URL input frame 40 in the reference page 39, the display name input frame 41, and the explanation input frame 42 are the data input frames used to jump from a comment display, described below, to another page, and these frames are inputted as needed. When the user has finished inputting these comment data, he clicks on the "OK" button.

Then, the annotation processing module judges, based upon said input, whether the character string is a character string to which a comment has already been appended and which has thus become a keyword (Step S8). This processing is the judgement processing derived from the fact that a plurality of comments can be appended to the same character string, which is one of the characteristics of this invention.

When it is found that the character string is not the keyword to which a comment has been appended (that is, if Step S8 is No.), the processing of merging the tag is executed by the annotation processing module (Step S9). In this processing, a tag is embedded in the original HTML text in the page that is displayed by a browser at the present moment in order to associate the selected character string with the comment data.

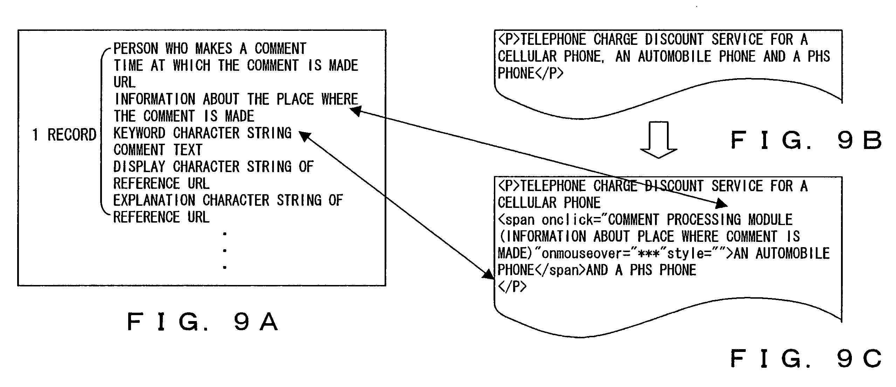

Above-mentioned processing contents that are exchanged between the annotation processing module and the browser (processing contents of the merging process) are displayed in Figs. 9A, 9B and 9C. Fig. 9A shows a data structure that is made by the annotation processing module. Fig. 9B shows a description prior to a tag being inserted in the markup language displayed by the browser. Fig. 9C shows a description after a tag is inserted in the markup language displayed by the browser.

In the processing of appending, separating or making a comment, a comment file is made for each comment as one record, as shown in Fig. 9A. Each datum such as a comment maker's name, a comment making time, a URL, location information for a comment, a keyword character string and a comment text is stored in the comment file of this one record. Also, the URL related to the comment and the keyword to which the comment are appended is stored as a reference URL, and the data of a display character string and an explanation character string related to the URL is stored, in accordance with the input from the user.

In the processing of appending a comment, a text described in a markup language enclosed by a <P> tag including the selected character string "automobile phone," for instance, "<P> a cellular phone and automobile phone fee discount service </P>" is extracted , as shown in Fig. 9B, and <span> tags are embedded to enclose "automobile phone" in the markup language enclosed by a <P> tag, like "<span> automobile phone <span>," as shown in Fig. 9C. Some information such as [onclick = "comment module (location information)"], [onmopuseover = "***"] and [style = " " ] is appended to this <span> tag.

When one clicks on the keyword character string (for a example, "automobile phone" shown in Fig. 9C) to which the comment data in the page displayed by a browser is appended, the annotation processing module of this invention operates, and the following information and marks are described: information that pops up and displays the comment data corresponding to the keyword character string, marks that are appended to the top of a keyword character string such as [ 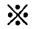 ] and [ 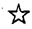 ], information about the change of the cursor shape due to the movement of the anchor or the mouse composed of a sign that is appended under a keyword character string such as "a red underline" or "coloring" the keyword character string itself.

Then, the browser appends an underline to the display of the keyword area, highlights this keyword area when it is pointed to by the mouse, calls the annotation processing module when this keyword area is clicked on by the mouse and transfers the control of the display to the annotation processing module.

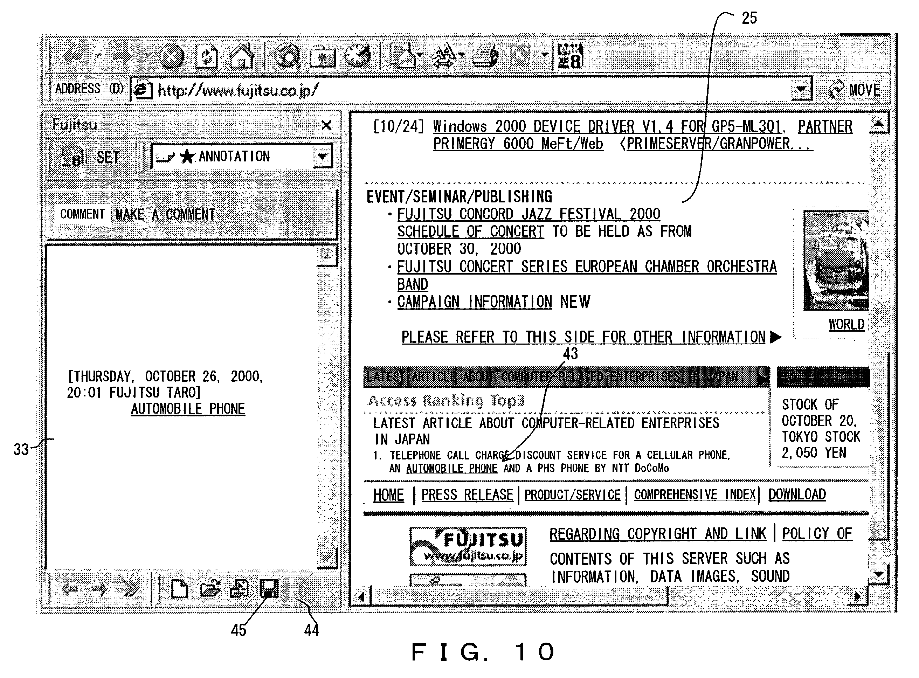

In other words, the results of the merging processing are reflected as cache data of the browser. The highlight of the highlighted character string "automobile phone" on the page 25 disappears, as shown in Fig. 10. Instead, displayed is the character string "automobile phone" 43 with a red underline (a black underline in Fig. 10 because color display is not available), which indicates that tags have been given to the character string, that is, that a comment has been appended to the character string and the character string has become the keyword.

Next, the annotation processing module reflects the results of the processing to the keyword display frame 33 (Step S11). In the example shown in Fig. 10, the date and time the comment was made, "October 26,2000, Thursday, 20:01" is displayed in the keyword display frame 33, and the name of the person who made the comment, "Taro Fujitsu" is displayed on the right of the date and time, and the keyword "automobile phone" is displayed under it.

In the above-mentioned Step S8, if a comment has been appended to the character string (when S8 is Yes), the annotation processing module merges a tag (Step S10). This processing is the one that changes the information of the tag that has been once embedded in original HTML text so that a plurality of comments can be brought d up by clicking on the keyword or the character string, when the plural of comments have been appended to the same keyword. In this case, the processing of Step S11 is also executed.

Then, the user judges whether he should append a next comment (Step Ss12). If he appends a comment (when S12 is Yes), the operation goes back to Step S3. In this way, the processing is repeated from S3 to S12. This processing from S3 to S12 is repeated by the number of comments.

If the user does not append any comment (when S12 is No), he clicks on the "save" button 45 displayed on the task bar 44 in the keyword display frame 33 (Step S13).

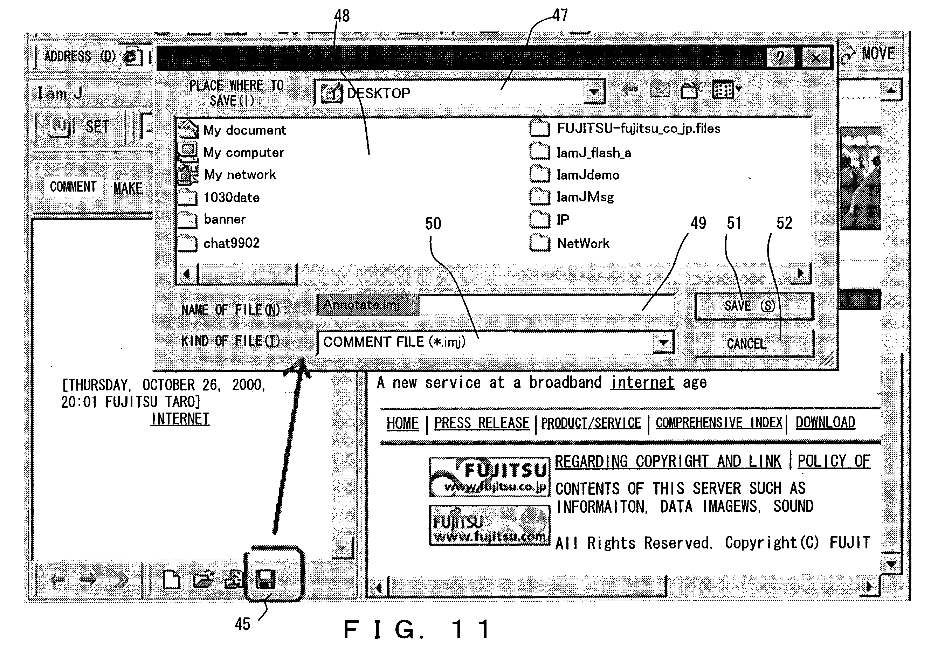

Then, displayed is the save file designation window 46 in which a file to save the comment data is designated, as shown in Fig. 11. This save file designation window 46 is a general save file designation window, which displays an input window 47, a file display window 48, an input window 49 to specify the name of the file to be saved, an input window 50 to specify the kind of the file, a "save" button 51 and a "cancel" button 52.

In the example of Fig. 11, "desktop" is selected and displayed in the input window 47 to specify the place to save it, "Annotate. Imj" is inputted and displayed in the input window 49 to specify the name of the file to be saved, and "comment file (∗. Imj)" is inputted and displayed in the input window 50 to specify the kind of the file.

Then, the "comment" that has been made in association with the tag given to the character string "automobile phone", as shown in Fig. 8, is saved under the file name of "Annotate. Imj" on the desktop independently of the original HTML text, thus causing a series of processes to be completed (Step S14).

In this way, the comment that has been appended to an arbitrary HTML text is separated from the original HTML text, and is saved on the desktop in the name of "Annotate. Imj," and then a series of processes such as appending, separating and saving of the comment data are executed. The user can select any place as the place to save the comment data, which is not necessarily limited to the desktop.

Next, described below is the process of merging the saved comment data with the HTML text and of displaying the merged text. First, in the flowchart shown in Fig. 5, the processes of S101 and S102 are the same as those of S1 and S2 shown in the flowchart of Fig. 4. That is, in the process of S101, the browser window 20 and the page 25 shown in Fig. 5A , for example, are displayed, and in the following step 102, the comment window 27 shown in Fig. 6A is displayed online.

An "Open" button enclosed by the frame 54 and an "Addition" button enclosed by the frame 56 are displayed with other buttons in the tool bar 53 under the keyword frame 33 in the comment window 27.

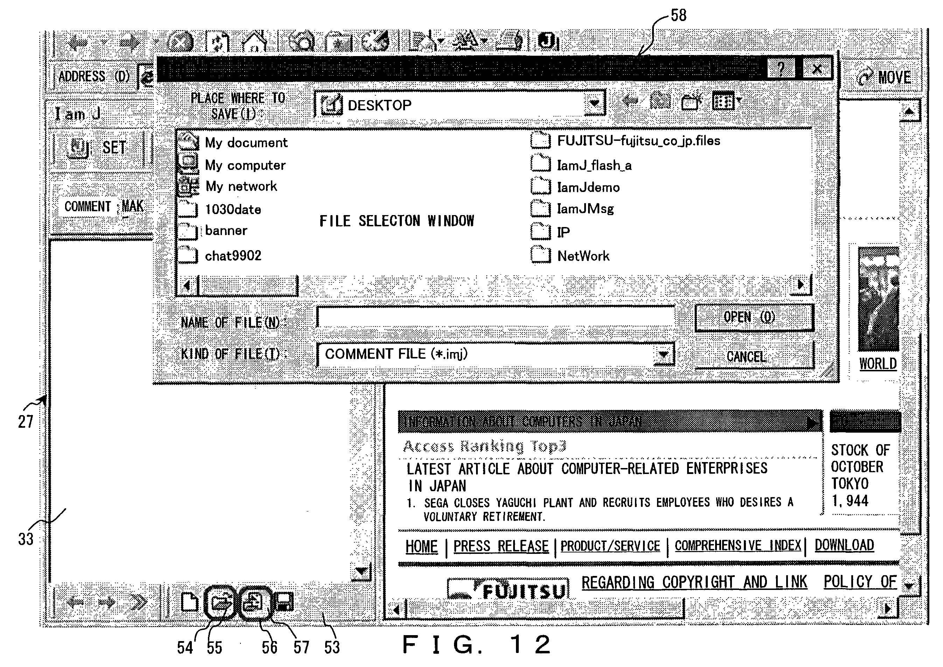

Then, the user clicks on the "Open" button 55 (Step S103). A file selection window 58 is displayed, as shown in Fig. 12. Then, the user selects the comment file he wants to open, which has an extension of "imj."

Then, the annotation processing module makes the browser query the server 9 for the page designated by the URL via the Internet using the URL included in the comment file, and merges the text in the page that has been transmitted from the server 9 with the data included in the comment file (Step S 105). This processing is the same as that of Step S9 shown in Fig. 4.

The user can double-click on the icon in the comment file on the desktop without executing the processes of Step S101, S102 and S103 (Step S104). Note, however, that the extension "imj" is associated with the annotation processing module of this invention in advance, and the annotation module as the processing object is started up by double-clicking on the icon of the comment file. In this case, the browser is instructed to obtain the page to be opened using the URL included in the comment file that has been double-clicked on, and said page is actually obtained, and the processing of Step S105 is executed immediately. The comment module reflects the merging results to the display of the comment window 27 (Step S106).

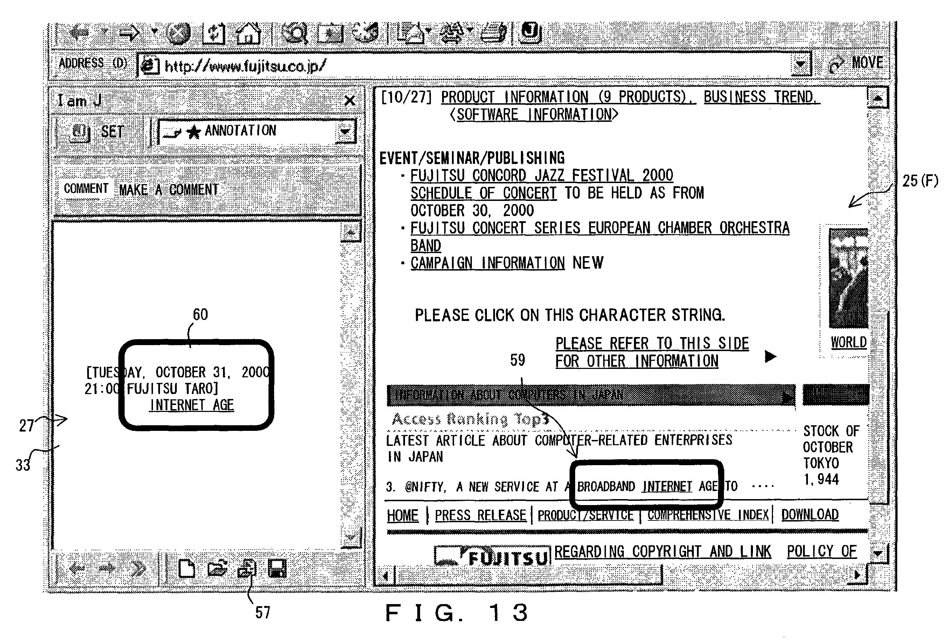

Thus, a comment file named, for instance, "AA. Imj" is made for the character string named, for instance, "Internet age" in the text of the page with the title F, and the file "AA. Imj" is clicked on and selected by the user. The date and time the comment file "AA. Imj" was made, "October 31, 2000, Tuesday, 21:00," the name of the person who made it, "Taro Fujitsu," and the keyword of the comment file, "Internet age," are enclosed by the frame 60 and are displayed in the display frame 33 of the comment window 27, as shown in Fig. 13.

When "page 25 with the title F" of the URL that is a data item of the comment file "AA. Imj" is displayed in the HTML display area, the page 25 with the title F is displayed with an underline beneath the character string "Internet age" encloseed by the frame 59.

Then, the user judges whether he should add another comment (comment file, which continues hereinafter) (Step S107). If he adds another comment (when S107 is Yes), he clicks on the "Add" button 57 and selects the comment file to be added (Step S108). Then, the process goes back to Step S105, and the other comment file which has newly been selected and which is merged with the comment file that was selected earlier is displayed.

On the other hand, in the judgement of Step S107, if the user does not add any comment (when Step S107 is No), he clicks on the keyword in order to display the comment (Step S109). This processing is the one to click on the keyword displayed in the keyword display frame 33 of the comment window 27 or to click on the character string with a mark such as that displayed in the underlined text of page 25. Also, the keyword in the keyword display frame 33 as well as the character string to which a mark is attached by the processing of this invention is called a comment anchor.

The annotation processing module detects a click notice of the comment anchor (Step S110). The annotation processing module that has detected the click notice of the comment anchor obtains the comment information corresponding to the clicked keyword from the data shown in Fig. 9A (Step S112). One of irregularities that can occur when a plurality of keywords are displayed in the keyword display frame 33 of the comment window 27 is that the comment of the clicked keyword has nothing to do with the displayed page. The above-mentioned judgement is the one for coping with such a case as this.

If the comment which is appended to the clicked keyword is found not to be the comment for the displayed URL based upon this judgement (when S112 is No), the user moves to the URL that is designated by the URL information of the comment file. That is, the user changes the display (Step S113) and proceeds to the processing of Step S114. The above-mentioned process of changing the display is executed by instructing the browser, from the annotation processing module, to obtain the designated URL page and display the obtained page.

On the other hand, if the comment which is appended to the clicked keyword is found to be the comment for the displayed URL based upon this judgement (when S112 is Yes), the user immediately proceeds to the processing of Step S114.

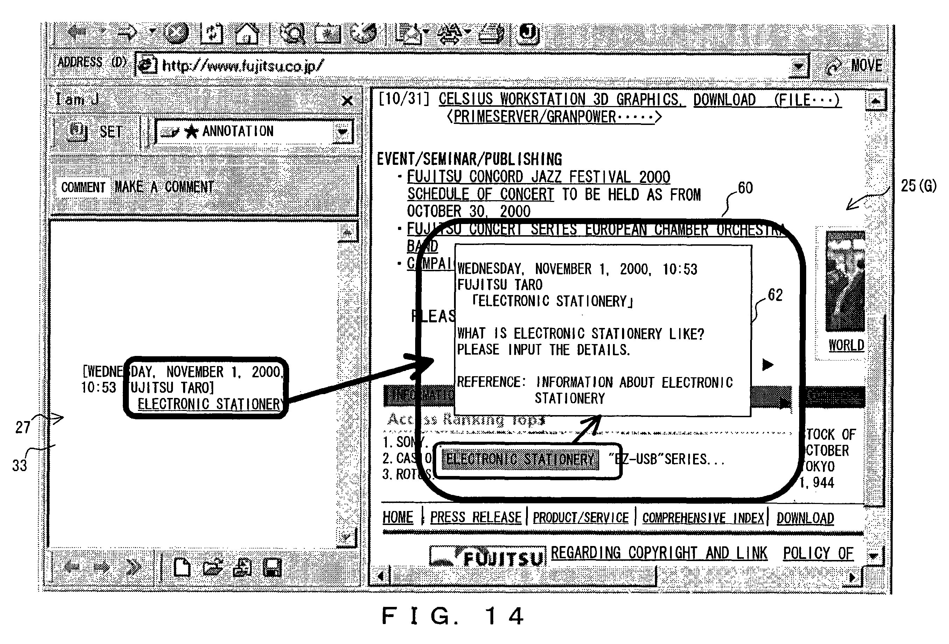

The example shown in Fig. 14 shows that in the process of selecting the keyword in Step S109, the character string "electronic stationery" in a certain page, for instance, a page 25 with the title "G," has been selected. Note that the displayed comment file and page are different from those in Fig. 13.

In the process of selecting the keyword in Step S109, the user can click either on the keyword "electronic stationery" in the keyword display frame 33 of the comment window 27, or on the character string "electronic stationery" in the text of the page 25 with the title "G." This click is detected in Step S110, and in the processing in Step S114 after the processing Step S111 the annotation processing module highlights the specified keyword character string "electronic stationery" in the text of the "G" page 25 displayed by the browser (Step S114).

This processing is such that the annotation processing module analyzes the tag in the text of the "G" page 25b displayed by the browser, specificaally, the tag in the original text described in a markup language, and finds the corresponding keyword, and instructs the browser to highlight the character string of the keyword.

After this processing in Step S114, the annotation processing module extracts the comment data for the corresponding keyword ("electronic stationery" in this example) from the data (refer to Fig. 9A), and displays this comment data in the vicinity of the keyword "electronic stationery" that is highlighted in the browser window, as shown in the comment display window 62 enclosed by the frame 61 shown in Fig. 14 (Step S115), and then completes the processing.

If the client apparatus in which the annotation processing module of this invention is mounted is used, a client can compose a "special tag," make comment data and store the comment data as a comment data file, as shown in Fig. 4 and Fig. 5. He can also make a new file by combining many comment files, and can append a plurality of comments to the same keyword (the character string at the same place in the same page). Also, he can append a different comment to the place where the same keyword exists (the character string in different pages or the character string displayed at a different place in the same page).

The annotation processing module of this invention operates, based upon a "keyword," in the concept of the comment file that has this keyword, the "URL" obtained from this comment file, "in an arbitrary tag" and "an arbitrary character string," and displays the comment information which is appended to a keyword. This displayed comment is not merged with the original text in the markup language displayed by a browser (only a special tag and its attribute information are merged), and the annotation processing module displays this comment in a window different from a browser.

In appending the comment information, the annotation processing module of this invention receives a character string that a user selected from a browser, makes a keyword by embedding a special tag peculiar to this invention in a markup language including this character string, transfers it to the browser, and makes a comment file linked with this tag, and then, a client 6 retains it.

An address of a Web page (URL) to which a keyword is appended is retained in this comment file (imj file) that the client 6 retains, as shown in Fig. 9A. This comment file can be sent to other people by e-mail, and the other party who receives the comment file can start up the annotation processing module of this invention by clicking on the comment file, let the browser obtain the Web page of the URL retained in the comment file, display the Web page merged with the data contents of the imj file, and view the file by clicking on the keyword character string in the displayed text.

In addition, the annotation processing module can append a different comment to the same character string, and can also append a comment not only to a character string in one page but to a character string in another page. For instance, if different character strings in different pages are not clear in meaning, a comment such as "What is this?" can be appended to the two different character strings.

Furthermore, the annotation processing module of this invention can be used as a document proofreading support system when one performs a task of making documents related to one's business. For instance, one stores a proofread document in the comment file, sends the comment file to several persons concerned with the file reflecting the finally reviewed results in the comment file, thus allowing the person who made the original document to correct it based upon said comment file.

Moreover, when a staff member of a corporation makes an application of a plan in a Web page and obtains approval from his manager, the manager brings up the Web page, and makes a digital signature on said page if he agrees to the applied plan, and sends a signed page back to the person who applied for approval of the plan. Then, the plan is shown to the general manager of the department he belongs to, the general manager of the division, and the president of the corporation, one after another, and if they have any comments about any matter of the plan, they can point out the matter and append comments about it. Therefore, it becomes clear to the staff member who approved the plan and when the plan was approved, or why the plan was not approved.

In this way, the staff member can show only the comments to managers and people concerned and can leave the original text of the plan as is. Therefore, it is possible to easily construct a plan-application-approval system for commercial purposes, in which browsing and checking can be executed, by opening the page using a network.

## Claims

1. A client apparatus (6) for displaying a page made in a markup language by a browser, comprising:
a comment information appending unit (1) appending desired comment information to any arbitrary place in said page;
a comment information separating unit (2) separating said comment information appended by the comment information appending unit (1) from said page;
a comment information storing unit (3) storing said comment information separated by the comment information separating unit (2); and
a comment information merging unit (4) merging said comment information stored by the comment information storing unit (3).

2. A client apparatus (6) according to Claim 1, wherein said place is at least one of either a specified tag of the markup language, a specified character string or graphical information.

3. A client apparatus (6) according to Claim 1, wherein desired comment information is appended to said place by displaying it in at least one of either a specified tag of the markup language, a specified character string or graphical information as the arbitrary place for the markup language that is being displayed in the client apparatus at present and also by merging specified tag and displaying it on a browser.

4. A client apparatus (6) according to Claim 1, wherein said comment information consists of at least one of either character string information, graphical information, signaturb/certification information or hypertext link information, and it can be distributed, jointly owned or transferred via a network or a recording medium.

5. A client apparatus (6) according to Claim 4, wherein said hypertext link information includes a shortcut function to a network or a bookmark function to a Web page.

6. A client apparatus (6) according to Claim 3, wherein said specified tag includes, as tag information, not only link information to call said comment information when said place is clicked on, but also at least one of anchor mark information appended to said place, or information about pointer-shape variation occurring according to the pointer movement to said place.

7. A client apparatus (6) according to Claim 1, wherein the comment information separating unit retains, as said comment information, at least place information of the comment information, comment text, expression information of said place and address information of the page including said place.

8. A client apparatus (6) according to Claim 7, wherein the comment information merging unit obtains the page including said place based on the comment information read from the comment information unit, said place of this obtained page is merged with said specialized tag and displayed on the browser, and at least said comment is merged with said page and displayed on the browser when said place of this displayed page is clicked on.

9. A recording medium (5) recording a program for a client apparatus (6) that displays a page made by a markup language using a browser, executing following processes:
appending desired comment information to a desired place on the page of the markup language that is being viewed with a browser;
separating said comment information from the markup language in said page;
storing said separated comment information; and
merging the stored comment information with a desired page of said markup language.

10. A recording medium (5) according to Claim 9, wherein said place is at least one of either a specified tag of the markup language, a specified character string or graphical information.

11. A recording medium (5) according to Claim 9, wherein said comment information consists of at least one of either character string information, graphical information, signature/certification information or hypertext link information, and it can be distributed, jointly owned or transferred via a network or a recording medium.

12. Arecording medium (5) according to Claim 9, wherein said hypertext link information includes a shortcut function to a network or a bookmark function to a Web page.

13. A client apparatus (6) that displays a page made in a markup language, comprising:
a storing unit storing comment information associated with a page;
a judging unit judging whether there is any comment information related to a page; and
a display controlling unit setting said page and said comment information that can be displayed by said client apparatus when there is said comment information related to said page.

14. A client apparatus (6) according to Claim 13, wherein said comment information includes address information of the related address, specified place information in said page and a comment text, and said display controlling unit sets the comment text that can be displayed by the client apparatus in association with the specified place information in said page.

15. A client apparatus (6) according to Claim 14, wherein the display controlling unit displays comment text corresponding to said specified place information according to an instruction that specified place information in a displayed page should be detected.

16. A recording medium (5) recording a program executed by a client apparatus that displays a page made in a markup language, executing the following processes:
judging whether there is any comment information related to said page, and setting said page and said comment information that can be displayed by said client apparatus when there is any comment information related to said page.

17. A recording medium (5) according to Claim 16, wherein said comment information includes address information of the related address, specified place information in said page and comment text, and said program executes the process of setting the comment text that can be displayed by the client apparatus in association with the specified place information in said page.

18. A recording medium (5) recording said program according to Claim 17, wherein said program displaying comment text corresponding to said specified place information according to an instruction that specified place information in a displayed page should be detected.

19. A display method for displaying a comment as well as a page made in a markup language, executing the following processes:
judging whether there is any comment information related to the displayed page;
setting the page and the comment information that can be displayed by the client apparatus when there is any comment information related to the page; and
displaying the comment information corresponding to the instructed place according to an instruction that said displayed page should be detected.

20. A client apparatus (6) displaying a page made in a markup language, wherein
an instructing unit instructing that said page indicated by an address included in the instructed comment information should be obtained; and
a display controlling unit setting said comment information that can be displayed by said client apparatus in association with specified place information in said page information having been obtained by the above-mentioned instruction based upon the specified place information included in said comment information.

21. A recording medium (5) recording a program executed by a client apparatus that displays a page made in a markup language, and executing the following processing:
instructing that the page indicated by an address included in the instructed comment information should be obtained; and
setting said comment information to be displayable in association with specified place information in the page information that has been obtained by said instruction based upon specified place information included in said comment information.

22. A display method for displaying a comment as well as a page made in a markup language, executing the following processes:
detecting instructed comment information;
instructing that a page indicated by an address included in the instructed comment information should be obtained;
setting comment information to be displayable in association with specified place information in the page information that has been obtained by said instruction; and
displaying comment information corresponding to said instructed place according to an instruction that said displayed page should be detected.

23. A client apparatus (6) displaying a page made in a markup language, having:
a detecting unit detecting a specified place in specified said page;
an input unit inputting a comment to said specified place; and
a file making unit making a file composed of said comment information, the address information of said page and the information about said place in said page.

24. A recording medium (5) recording a program executed by a client apparatus that displays a page made in a markup language, executing the following processing:
detecting a specified place in said displayed page; inputting a comment information corresponding to said specified place; and
making a file composed of the address information in said page, the information about said place in said page and said comment information.

25. A method for making a comment about a page, executing the following processes:
specifying a desired place in a displayed page;
inputting a comment to cope with said specified place; and
making a file consisting of the address information in said page, information about said place in said page and said comment.
